# EUROPEAN PATENT APPLICATION

(11) **EP 1 193 954 A1**
(43) Date of publication of application: **03.04.2002**
(21) Application number: 01922043.3
(22) Date of filing: 24.04.2001
(51) Int. Cl.: H04M 1/274, H04M 1/247

(54) **PORTABLE INFORMATION TERMINAL**

(30) Priority: 28.04.2000 JP 2000128712
(71) Applicant: Sony Corporation, Tokyo 141-0001 (JP)
(72) Inventor: USHINO, Tatsuji, Sony Corporation, Tokyo 141-0001 (JP); NAMEKAWA, Masato, Sony Corporation, Tokyo 141-0001 (JP); TAKAHASHI, Naohiro, Sony Corporation, Tokyo 141-0001 (JP)
(74) Representative: Nicholls, Michael John
(86) International application number: JP0103500
(87) International publication number: WO0184810

(57) **Abstract**

In the present invention, main information being selected by a display indicator is changed in accordance with selection operations and corresponding detailed information is taken out of a storage means when the selection operations are interrupted and is displayed at a part of a display means, thereby call numbers can be displayed without performing selection and determination operations, so that information can be retrieved with simple operations.

## Description

### Technical Art

The present invention relates to a portable information terminal device and is suitably applied to a portable telephone, for example.

### Background Art

Heretofore, as to a list display screen such as a telephone directory screen and an incoming and outgoing call history screen, a portable telephone firstly lists and displays main information on items which can be selected, and when a user selects and determines desired main information, the portable telephone displays detailed information related with the main information selected and determined, thus.making it possible to select and display a huge amount of information using a display having a limited display area.

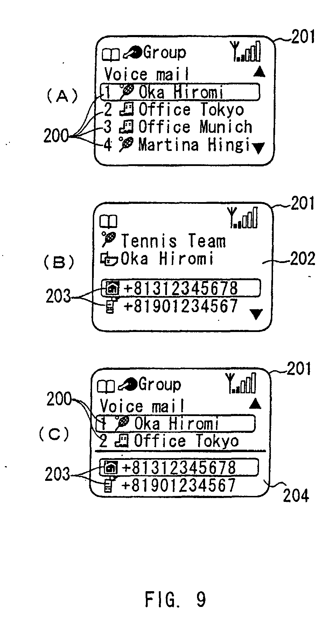

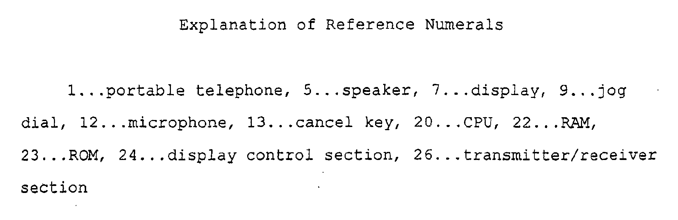

For example, as to a telephone directory screen, with reference to Fig. 9, the portable telephone firstly lists and displays call names 200 as main information on a display 201 (Fig. 9(A)).

Then, when a user selects and determines any of the displayed call names 200, the portable telephone displays a detail screen 202 as shown in Fig. 9(B) on the display 201 and also displays call numbers 203 as detailed information related with the call name 200 selected and determined.

Such a portable telephone, however, has a problem in troublesome operations because selection operation and determination operation of main information have to be performed to check detailed information.

Further, such a case can be considered that a detailed information display area 204 is provided at a part of the display 201 as shown in Fig. 9(C) and corresponding call numbers 203 are displayed as detailed information, as well as listing and displaying the call names 200 as main information, this case, however, also has a problem in that the area for listing and displaying main information is narrowed and the operability deteriorates after all.

### Description of the Invention

The present invention has been made in view of aforementioned points, and intends to provide a portable information terminal device with excellent usability which is capable of retrieving information with simple operations.

To solve such problems, in the present invention, provided are a display means for listing and displaying plural pieces of main information as well as displaying a display indicator to select at least one of the displayed main information, a storage means for storing plural pieces of main information and plural pieces of detailed information respectively related with the plural pieces of main information, a selecting means for switching the main information being selected by the display indicator in accordance with selection operations which are inputted via a prescribed operation means, and a display control means for taking out detailed information related with the main information being selected by the display indicator, from the storage means and displaying it at a part of the display means when the selection operations are not inputted for a fixed time while the plural pieces of main information are listed and displayed on the display means.

According to the present invention, the main information being selected by the display indicator is switched in accordance with selection operations and corresponding detailed information is taken out of the storage means and displayed at a part of the display means when the selection operations are interrupted, thereby call numbers can be displayed without selection and determination operations, thus making it possible to retrieve information with simple operations.

### Brief Description of the Drawings

Fig. 1 is a schematic diagram showing the whole structure of a portable telephone in one embodiment of the present invention.
Fig. 2 is a schematic diagram showing a sectional structure of a jog dial.
Fig. 3 is a block diagram showing a circuit structure of the portable telephone.
Fig. 4 is a schematic diagram showing a screen display of the portable telephone.
Fig. 5 is a schematic diagram showing an automatic display of detailed information.
Fig. 6 is a flowchart showing a normal item display processing procedure.
Fig. 7 is a flowchart showing a scroll display processing procedure.
Fig. 8 is a flowchart showing a detailed information display processing procedure.
Fig 9 is a schematic diagram showing the structure of a conventional item display screen.

### Best Mode for Carrying Out the Invention

Hereinafter, an embodiment of the present invention will be described in detail with reference to drawings.

### (1) Whole Structure of Portable Telephone

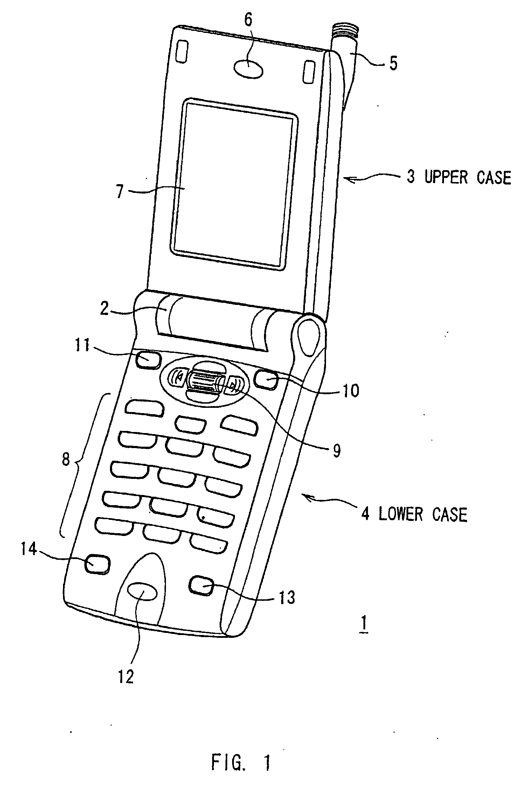

In Fig. 1, a reference numeral 1 shows a portable telephone of the present invention as a whole, which can divide into an upper case 3 and a lower case 4 with a hinge 2 placing at the center as a border, and which is foldable down the hinge 2.

In the upper case 3, an antenna 5 for transmission and reception is attached at the upper-right part on the back so as to be drawn and contained, and radio waves are transmitted and received to/from a base station (not shown) via the antenna 5.

In addition, a speaker 6 is provided at an upper end on the front surface of the upper case 3, and a display 7 which is a LCD (Liquid Crystal Display) is provided at the center of the front surface to display various kinds of information such as a menu screen, reception quality of radio waves, a battery level, a history of outgoing calls, a history of incoming calls, electronic mails, a telephone directory screen and a schedule, corresponding to various functions, on the display 7.

On the other hand, in the lower case 4, ten keys 8 including "0" to "9", "#" and "*" are provided at the center of the front surface, and a jog dial 9 as an operation means is provided at the upper central part of the front surface so as to be rotated and pushed. In addition, a power/end key 10 for turning the power of the portable telephone 1 ON/OFF and for ending a call and a call key 11 for answering a coming call and for calling a number are provided at the both sides of the jog dial 9.

In addition, a microphone 12 for collecting voices of a user is provided at the lower central part of the front surface of the lower case 4, and a cancel key 13 for canceling editing operation and scroll operation and a memo key 14 for recording voices during conversation are provided at the both sides of the microphone 9.

Then, the portable telephone 1 selects the call name desired by a user, out of a plurality of call names being displayed on a telephone directory screen, in accordance with the rotation operations of the jog dial 9, determines the name by pushing the jog dial 9, in order to call the call number corresponding to the call name.

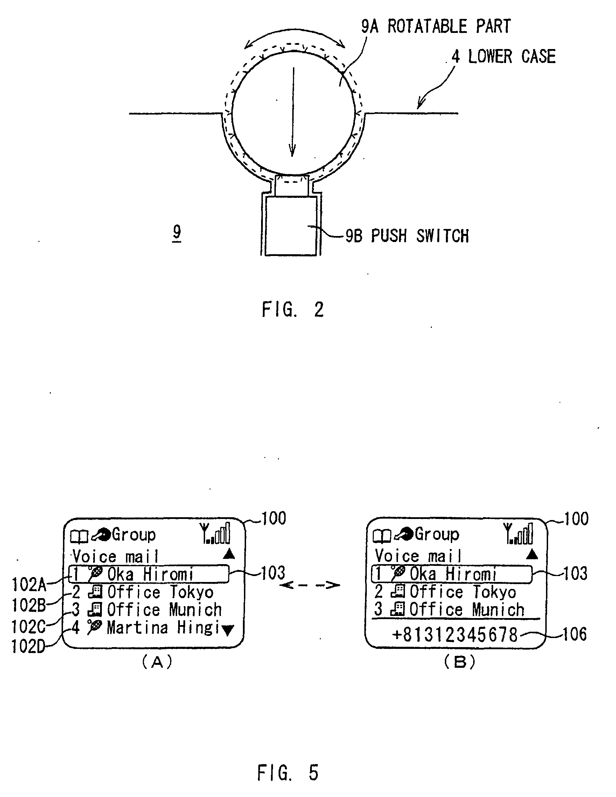

Here, in the job dial 9, a cylindrical rotatable part 9A slightly projects from the front surface of the lower case 4 is attached as shown in Fig. 2, thereby the rotatable part 9A can be easily rotated and pushed with a thumb of a user.

This jog dial 9 generates a rotation pulse base on the rotation operations via a built-in rotary encoder every time when the rotatable part 9A is rotated, in order to inform the internal circuits of the amount of rotation operation, and also every time when the rotatable part 9A is pushed, it informs the internal circuits of this via a push switch 9B.

This rotatable part 9A generates a light catch every given rotational angle (hereinafter, referred to as a rotation click), and generates a rotation pulse of one pulse every time when one rotational click is made. Thereby, in the portable telephone 1 can surely make a user notice the amount of rotation operation of the jog dial 9 by thumb's feeling.

Note that, a battery pack not shown is contained inside the back side of the lower case 4, and when a power is turned on by operations of the power/end key 10, power is supplied from the battery pack to the internal circuit blocks so that the portable telephone 1 is in an active mode.

Further, a SIM card connecting part for connecting a SIM (Subscriber Identity Module) card storing information on subscribers is formed in the battery pack installing part of the lower case 4, and the SIM card can be inserted and removed while the battery pack is removed.

### (2) Circuit Structure of Portable Telephone

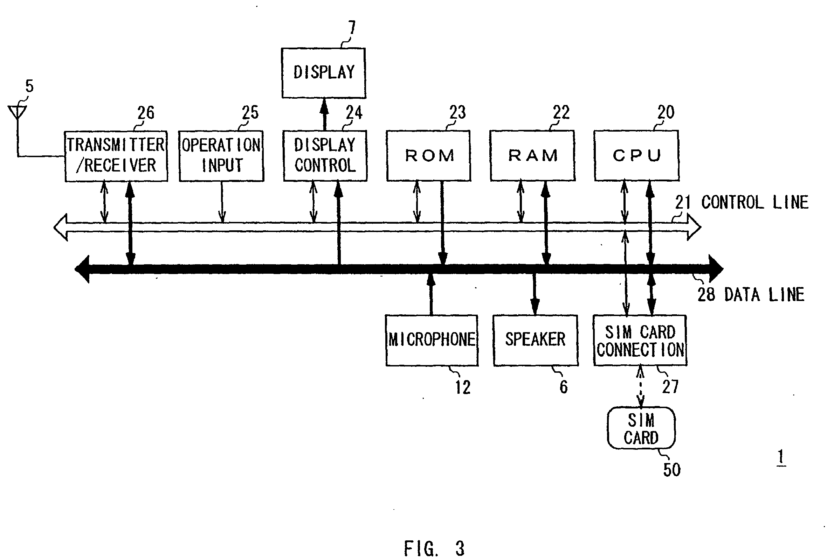

Next, the circuit structure of the portable telephone 1 will be explained with reference to Fig. 3. The portable telephone 1 has such a structure that a RAM (Random Access Memory) 22, a ROM (Read Only Memory) 23, a display control section 24, an operation inputting section 25 comprising the ten keys 8, the jog dial 9, the power/end key 10, the call key 11, the cancel key 13 and the memo key 14, a transmitter/receiver section 26, and the SIM card connecting part 27 are connected to a CPU (Central Processing Unit) 2 for controlling the whole functions of the portable telephone 1, with a control line 21.

In addition, the CPU 20, the RAM 22, the ROM 23, the display control section 24, the transmitter/receiver section 26, the SIM card connecting section 27, the speaker 6, and the microphone 12 are connected to each other with a data line 28.

The RAM 22 serving as a storage means stores a telephone directory list containing a plurality of call numbers as detailed information inputted by a user and a plurality of call names as main information corresponding to these call numbers. In addition, the RAM 22 stores various kinds of setting information of the portable telephone 1 and histories of incoming and outgoing calls.

Here, in the portable telephone 1, various functions of the portable telephone 1 can be carried out by inserting the SIM card 50 into the SIM card connecting part 27.

That is, when the SIM card connecting part 27 recognizes the inserted SIM card 50, it makes a notice of the SIM card recognition to the CPU 20 through the control line 21 accordingly.

The CPU 20 takes out subscriber information from the SIM card 50 through the data line 28 when receiving the notice of the SIM card recognition, and then stores it into the RAM 22 and also activates the portable telephone 1 based on the subscriber information.

Then, in the portable telephone 1, the CPU 20 takes out and executes various application programs such as a basic program and a display control program, stored in the ROM 23, through the data line 28 at proper time, in order to carry out various functions.

For example, the CPU 20 controls the transmitter/receiver section 26 based on operated information inputted via the operation inputting section 25 in accordance with the basic program, to execute various kinds of communication processing such as calling processing and call ending processing.

That is, the transmitter/receiver section 26 performs the calling processing by transmitting a given control signal to the base station (not shown) via the antenna 5 under control of the CPU 20 through the control line 21, and also receives a call-arrival signal from the base station via the antenna 5 and informs the CPU 20 of the call arrival.

And during conversation, the transmitter/receiver section 26 amplifies and then demodulates a reception signal received via the antenna 5 to generate an audio signal, and outputs it from the speaker 6 through the data line 28, while it modulates and then amplifies an audio signal inputted though the data line 28 from the microphone 12 to generate a transmission signal and transmits it via the antenna 5.

In addition, the CPU 20 controls the display control section 24 mainly in accordance with the display control program to display various display screens on the display 7.

### (3) Display of Items of Portable Telephone

By the way, in the portable telephone 1, as to a screen having a plurality of items selectable, like a telephone directory screen and a schedule screen, the plurality of items is listed and displayed on the display 7 and an item desired by a user can be selected and determined by rotating and pushing the jog dial 9.

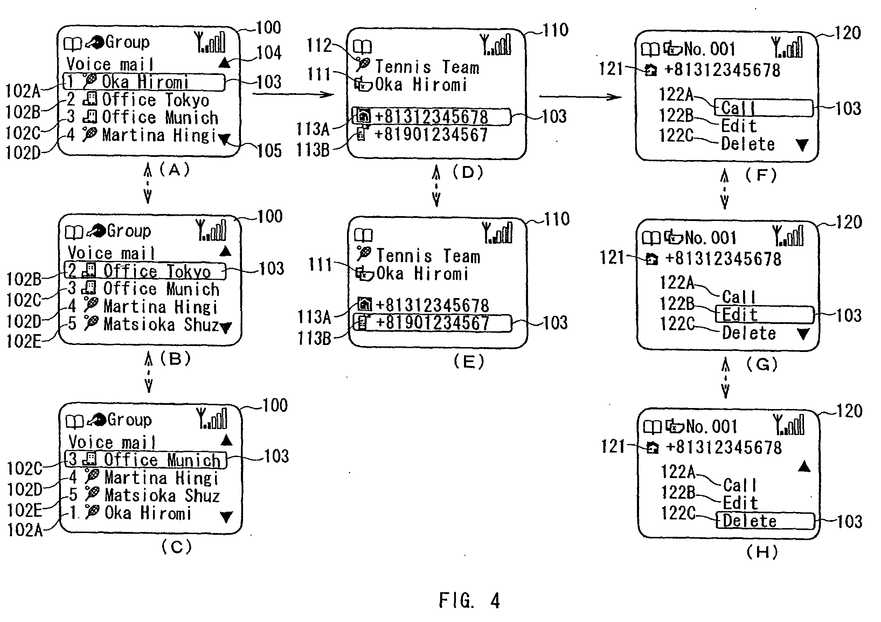

For example, when the power of the portable telephone 1 is turned on by pressing the power/end key 10, the CPU 20 initially displays a waiting screen (not shown) on the display 7, and under this situation, when the jog dial 9 is rotated, the CPU 20 displays the telephone directory screen 100 shown in Fig. 4(A) on the display 7 accordingly.

The CPU 20 displays a plurality of icons showing various kinds of information including reception quality of radio waves, at the upper part of the telephone directory screen 100 and displays a list of call names selectable as items in the center.

That is, the CPU 20 initially takes out four call names as main information contained by the telephone directory list in the RAM 2, from the beginning, and lists and displays the taken call names as items 102A to 102D on the telephone directory screen 100. Each item 102A to 102D has a memory number, a group icon showing an address group to which the call name is belonged, and the call name from the left in order.

In addition, the CPU 20 displays a short rectangular cursor 103 so as to recognize that the item 102A displayed on the first line is selected, and also displays an upward icon 104 and a downward icon 105 at the upper right part and the lower right part of the telephone directory screen 100 respectively so that a user can recognize that there are previous and following items hidden from the telephone directory screen 100.

When the jog dial 9 is rotated by one click upward under this condition and the rotation pulse is supplied from the jog dial 9 to the CPU 20, the CPU 20 deletes the item 102A displayed on the first line and shifts and displays the items 102B to 102D by one line upward (scroll display). At this time, the CPU 20 does not move the cursor 103 and places it on the item 102B shifted to the first line, so that the item 102B is selected. Further, the CPU 20 takes out a call name following the call name which is the item 102D, from the telephone directory data in the RAM 22 and newly displays it as an item 102E on the last line of the telephone directory screen 100 (Fig. 4(B)).

Then, when the jog dial 9 is further rotated upward under the condition where the last call name included in the telephone directory list is taken out, the CPU 20 performs the scroll display of items upward accordingly, as well as taking out the first call name stored in the telephone directory data by a looping method and displays it on the last line as the item 102A. (Fig. 4(C))

On the other hand, when the jog dial 9 is rotated downward, the CPU 20 scrolls and displays the items downward as shown from Fig. 4(C) to Fig. 4(B), and Fig. 4(B) to Fig. 4(A).

In this way, the CPU 20 as a selecting means scrolls and displays items upward and downward according to the rotation operations of the jog dial 9 as an operation means, to sequentially change and display an item selected by the cursor 103.

Then, the jog dial 9 is pushed to select and determine the item being selected by the cursor 103, the CPU 20 displays a call number selection screen 110 shown in Fig. 4(D) on the display 7 accordingly.

That is, the CPU 20 displays a plurality of icons indicating various kinds of information including the reception quality of radio waves at the upper part of the call number selection screen 110, also displays the call name 111 ("Oka Hiromi" in this case) as main information selected and determined, below them, and further displays an address group 112 and icon therefor to which the call name 111 is belonged, above the call name 111.

In addition, the CPU 20 takes call numbers as detailed information corresponding to the call name 111 out of the telephone directory data in the RAM 22 and lists and displays them as items 113A and 113B selectable. And the attribute icons indicating attributes of the call numbers (home, office, portable telephone or the like) are displayed on the left side of the items 113A and 113B.

Furthermore, the CPU 20 displays the cursor 103 so as to select the item 113A displayed on the first line.

When the jog dial 9 is rotated downward under the condition, the CPU 20 moves and displays the cursor 103 downward as shown in Fig. 4(E) to select the item 113B accordingly. Similarly, when the jog dial 9 is rotated upward, the CPU 20 moves the cursor 103 upward accordingly.

Furthermore, under this condition, when the jog dial is pushed to select and determine the item being selected by the cursor 103, the CPU 20 displays a processing selection screen 120 shown in Fig. 4(F) on the display 7 accordingly.

That is, the CPU 20 displays a plurality of icons indicating various kinds of information including the reception quality of radio waves at the upper part of the processing selection screen 120 and also displays the call number 121 as detailed information of the selected and determined item below them.

Further, the CPU 20 displays a call processing item 122A for calling the selected and determined call number, an editing processing item 122B for performing editing processing (such as changing of numbers and names) on the selected and determined call number, and a deletion processing item 122C for deleting the memory of the selected and determined call number, as well as the cursor 103 placed on the call processing item 122A on the first line to select it.

When the jog dial 9 is rotated downward under this condition, the CPU 20 moves and displays the cursor 103 downward as shown in Fig. 4(G) accordingly to select the editing processing item 122B. Then when the jog dial 9 is rotated downward, the CPU 20 displays the cursor 103 as shown in Fig. 4(H) to select the deletion processing item 122C.

On the other hand, when the jog dial 9 is rotated upward, the CPU 20 moves the cursor upward accordingly.

When the jog dial 9 is pushed under this condition and the processing being selected by the cursor 103 is selected and determined, the CPU 20 executes the processing corresponding to the selected and determined processing item (call processing, editing processing or deletion processing) accordingly.

Thus, the CPU 20 can select an item in accordance with rotation operations of the jog dial 9, and display and execute detailed information corresponding to the item selected by pushing the jog dial 9.

### (3-1) Automatic Display of Detailed Information

In addition of the above performance, in this portable telephone 1, when the operation inputting section 25 is not manipulated for a given time while the selection screen such as the telephone directory screen is displayed, detailed information corresponding to the selected item currently selected by the cursor 103 is automatically displayed.

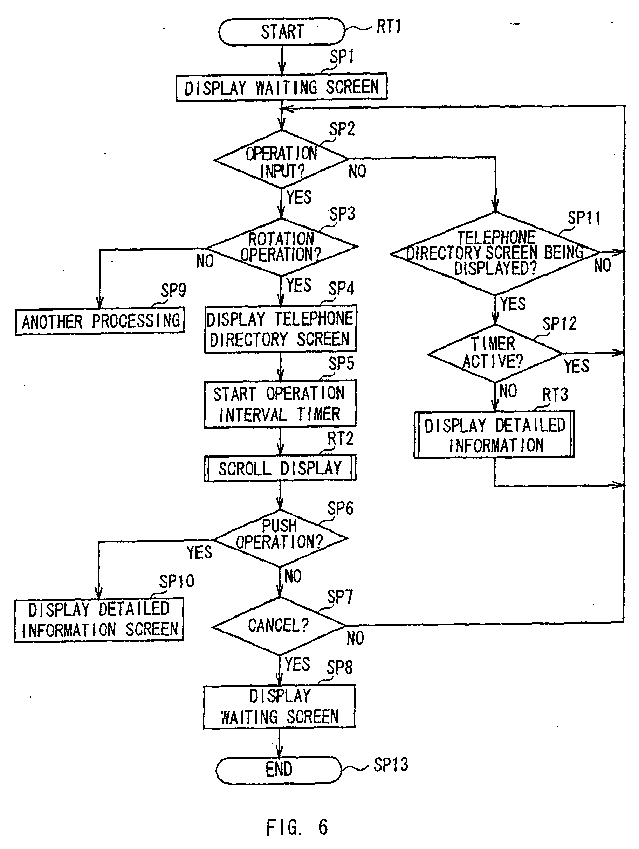

For example, as to the telephone directory screen 100 shown in Fig. 5(A), when the jog dial 9 is not manipulated for a standard time (two seconds, for example) or more, the CPU 20 serving as the display control means takes out the detailed information corresponding to the item being selected by the cursor 103 of this time, from the RAM 22, and displays it as a detailed item 106 at the lower part of the telephone directory screen 100.

Thereby, in the portable telephone 1, only by stopping the operations of the jog dial 9, without performing the selection and determination operations by pushing the jog dial 9, detailed information can be displayed, thereby desired information can be retrieved and executed with simpler operations.

### (4) Item Display Processing in the Portable Telephone

Next, a processing procedure for performing the aforementioned item display will be described in detail with reference to flowcharts shown in Fig. 6, Fig. 7 and Fig. 8.

When the power of the portable telephone 1 is turned on, the CPU 20 of the portable telephone 1 starts the item display processing procedure of the routine RT1 shown in Fig. 6 at starting step accordingly and moves to step SP1.

At step SP1, the CPU 20 displays a waiting screen (not shown) on the display 7 and proceeds to next step SP2.

At step SP2, the CPU 20 judges whether the operation inputting section 25 has been operated. When an affirmative result is obtained at step SP2, which means that the operation inputting section 25 has been operated and the CPU 20 proceeds to step SP3.

At step SP3, the CPU 20 judges whether the operation input via the operation inputting section 25 is the rotation operation of the jog dial 9. When a negative result is obtained at step SP3, which means that the operation input is not the rotation operation of the jog dial 9, then the CPU 20 proceeds to step SP9 where processing corresponding to the operation input is executed.

On the contrary, when an affirmative result is obtained at step SP3, which means that the operation input is the rotation operation of the jog dial 9, that is, the retrieval operation of the telephone directory screen, then the CPU 20 proceeds to step SP4 where it displays the telephone directory screen 100 (Fig. 4(A)) on the display 7, takes out four call names included in the telephone directory list in the RAM 22 from the beginning as main information, lists and displays the taken call names as the items 102A to 102D on the telephone directory screen 100. Then the CPU 20 proceeds to step SP5.

At step SP5, the CPU 20 starts an operation interval timer (not shown) for timing the operation interval standard time (two seconds, for example) which is the standard for judging the operation inputting interruption, and then proceeds to the scroll display processing procedure of the routine RT2.

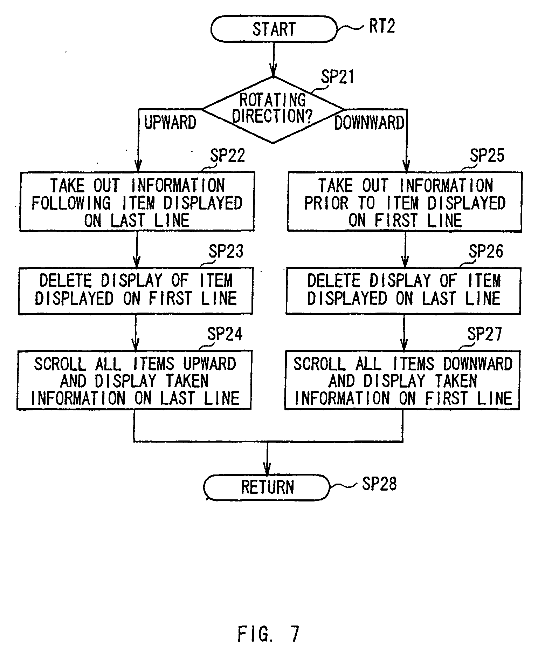

In Fig. 7, the CPU 20 of the portable telephone 1 starts the scroll display processing procedure of the routine RT2 at starting step and moves to step SP21.

At step SP21, the CPU 20 judges which direction the jog dial 9 has been rotated in. When it is judged at step SP21 that the jog dial 9 has been rotated upward, the CPU 20 proceeds to step SP22 where main information following the main information displayed on the last line on the telephone directory screen 100 is taken out of the telephone directory list of the RAM 22, then the CPU 20 proceeds to next step SP23.

At step SP23, the CPU 20 deletes the display of the item displayed on the first line of the telephone directory screen 100 and proceeds to next step SP24 where it scrolls all the items by one line upward and displays the taken main information on the last line of the telephone directory screen 100 as an item, then the CPU 20 returns to the routine RT1 at step SP28.

On the contrary, when it is judged at step SP21 that the jog dial 9 has been rotated downward, the CPU 20 proceeds to step SP25 where it takes out main information prior to the main information displayed on the first line of the telephone directory screen 100, from the telephone directory list of the RAM 22, and then the CPU 20 proceeds to next step SP26.

At step SP26, the CPU 20 deletes the display of the item displayed on the last line of the telephone directory screen 100 and proceeds to next step SP27 where it scrolls all the items by one line downward and displays the taken main information on the first line of the telephone directory screen 100 as an item, and then the CPU 20 returns to the routine RT1 at step SP28.

Thus, the portable telephone 1 sequentially takes out main information according to the rotation operations of the jog dial 9 and performs the scroll operation on the telephone directory screen 100.

Then, at step SP6 of the routine RT1 the CPU 20 judges whether the jog dial 9 has been pushed. When an affirmative result is obtained at step SP6, which means that the jog dial 9 has been pushed and the item being selected has been selected and determined. Then, the CPU 20 proceeds to step SP10 where it displays the call umber selection screen 110 (Fig. 4(D)) on the display 7 and takes out the call numbers corresponding the selected item as detailed information from the telephone directory list of the RAM 22 and lists and displays them as the items 113A and 113B.

On the contrary, when a negative result is obtained at step SP6, which means that the jog dial 9 has not been pushed and the item being selected has not been selected and determined, then the CPU 20 proceeds to step SP7 where it is judged whether the cancel key 13 has been pushed.

When an affirmative result is obtained at step SP7, which means that the cancel key 13 has been pushed and the display of the telephone directory screen is to be canceled, then the CPU 20 proceeds to step SP8 where it deletes the display of the telephone directory screen 100 and displays the waiting screen on the display 7, then the CPU 20 terminates the processing at step SP13.

On the other hand, when a negative result is obtained at step SP2, which means that the operation inputting section 25 not been operated, then the CPU 20 proceeds to step SP11 where it is judged whether the telephone directory screen 100 is being displayed.

When a negative result is obtained at step SP11, which means that the telephone directory screen 100 is not being displayed and then the CPU 20 returns to step SP2.

On the contrary, when an affirmative result is obtained at step SP11, which means that the telephone directory screen 100 is being displayed, then the CPU 20 proceeds to step SP12.

At step SP12, the CPU 20 judges whether the operation interval timer is active. When an affirmative result is obtained at step SP12, which means that the operation interval timer is active, that is, the operation interval standard time has not passed since the jog dial 9 was rotated last time, then the CPU 20 returns to step SP2.

On the contrary, when a negative result is obtained at step SP12, which means that the operation interval timer is not active, that is, that the jog dial 9 has not been rotated since the telephone directory screen 100 was started to be displayed, or that the operation input has not been made for the operation interval standard time since the rotation operations was performed last time and the operation interval timer has stopped, then the CPU 20 proceeds to the detailed information display processing procedure of the routine RT3.

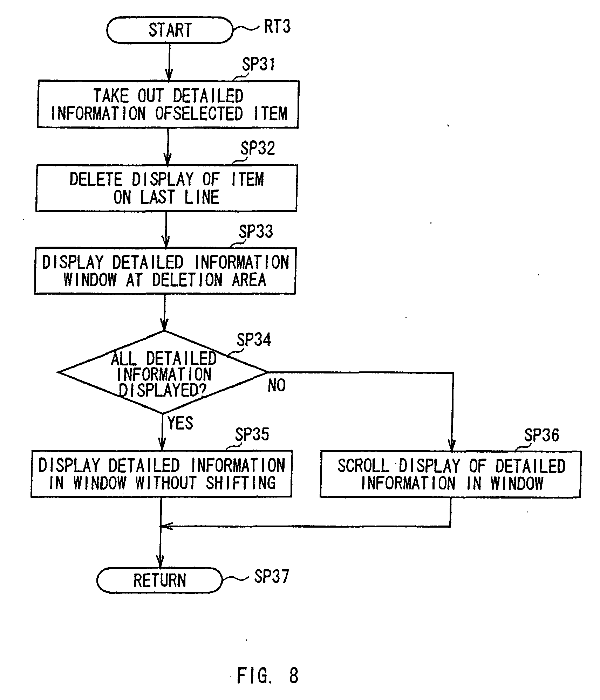

In Fig. 8, the CPU 20 of the portable telephone 1 starts the detailed information display processing procedure of the routine RT3 at starting step and proceeds to step SP31 where it takes out detailed information corresponding to the selected item (that is, main information) being selected by the cursor 103, from the telephone directory list of the RAM 22, and then the CPU 20 proceeds to step SP32.

At step SP32, the CPU 20 deletes the display of the item 102D displayed on the last line out of the items 102A to 102D displayed on the telephone directory screen 100 (Fig. 5(A)) and proceeds to step SP33 where it displays the detailed information display window 106 in the area where the display is deleted, and then the CPU 20 proceeds to step SP34 (Fig. 5(B)).

At step SP34, the CPU 20 judges whether all the taken detailed information can be displayed at the same time in the detailed information display window 106. When an affirmative result is obtained at step SP34, which means that all the detailed information can be displayed at the same time in the detailed information display window 106, then the CPU 20 proceeds to step SP35 where the detailed information is displayed in the detailed information display window 106 without being shifted, then the CPU 20 returns to the routine RT1 at step SP37.

On the contrary, when a negative result is obtained at step SP34, which means that all the detailed information can not be displayed at the same time in the detailed information display window 106, then the CPU 20 proceeds to step SP36 where the detailed information is displayed in the detailed information display window 106 so as to be automatically scrolled, and then the CPU 20 returns to the routine RT1 and executes the processing after step SP2.

Then, when the jog dial 9 is rotated again while the detailed information display window 106, the CPU 20 proceeds to step SP4 where the detailed information display window 106 is deleted and the telephone directory screen 100 (Fig. 5(A)) is displayed again.

### (5) Operations and Effects

In the aforementioned configuration, when the jog dial 9 is rotated while the telephone directory screen 100 is displayed, the CPU 20 of the portable telephone 1 sequentially takes out call names from the telephone directory data in the RAM 22 accordingly and performs the scroll display of them.

Then, when the jog dial 9 is pushed and the call name being selected by the cursor 103 is selected and determined, the CPU 20 takes out the call numbers corresponding to the call name from the telephone directory data in the RAM 22 accordingly and displays them on the call number selection screen 110.

On the other hand, when the jog dial 9 is not rotated for the operation interval standard time or more while the telephone directory screen is displayed, the CPU 20 takes out call numbers corresponding to the call name being selected by the cursor 103 and automatically displays them in the detailed information display window 106 of the telephone directory screen 100.

Then, when the jog dial 9 is rotated again under this situation, the CPU 20 deletes the detailed information display window 106 and displays the normal telephone directory screen 100.

According to the above performance, call names are sequentially scrolled and displayed in accordance with the rotation operations of the jog dial 9 and the corresponding call numbers are automatically displayed when the rotation operations are interrupted, thereby the user can view the cal numbers, without performing the selection and determination operations, only by stopping the rotation operations of the jog dial 9, thus making it possible to retrieve and execute information with simple operations.

### (6) Other Embodiments

Note that, the aforementioned embodiment has described the case where items are scrolled and displayed according to the rotation operations of the jog dial 9 serving as an operation means. The present invention, however, is not limited to this and items can be scrolled and displayed in accordance with the operations of various operation means such as a compass key or a joystick, for example.

Further, the aforementioned embodiment has described the case where the call numbers are treated as detailed information. This present invention, however, various kinds of information such as an electronic address and a URL (Uniform Resource Locator) on the Internet can be applied as detailed information.

Still further, the aforementioned embodiment has described the case where the present invention is applied to the item display on the telephone directory screen. This present invention, however, is not limited to this and can be applied to an item display on various screens such as a schedule screen and a function selection screen, which allows a user to select a desired item from a plurality of items.

Still further, the aforementioned embodiment has described the case where the operation interruption is judged based on the previously set operation interval standard time of the operation interval timer. This present invention, however, is not limited to this and the operation interval standard time can be changed by a user himself. Thereby detailed information can be displayed with meeting the user's feeling to operations.

Still further, in the present invention, the detailed information display window 106 can be displayed in a color different from that of the other area, or a call number can be blinked and displayed, thereby the call number as detailed information can be remarkably displayed.

Still further, the aforementioned embodiment has described the case where the present invention is applied to the foldable portable telephone. The present invention, however, is not limited to this and can be applied to various types of portable telephones such as a flipper portable telephone of which a part can be opened and closed, and a stick portable telephone of one-piece case.

Furthermore, the aforementioned embodiment has described the case where the present invention is applied to the portable telephone. This present invention, however, is not limited to this and can be applied to various portable information terminal devices such as PDA (Personal Data Assistant).

### Industrial Applicability

The portable information terminal device of the present invention is applied to a potable telephone, for example.

## Claims

1. A portable information terminal device, comprising:
display means for listing and displaying plural pieces of main information, as well as an display indicator for selecting at least one piece of information out of the displayed main information;
storage means for storing plural pieces of said main information and plural pieces of detailed information respectively corresponding to said plural pieces of main information;
selecting means for switching said main information being selected by said display indicator, in accordance with selection operations inputted via given operation means; and
display control means for, when said selection operations are not made for a given time while said plural pieces of main information are listed and displayed on said display means, taking out said detailed information corresponding to said main information being selected by said display indicator, from said storage means, and displaying said detailed information at a partial area of said display means.

2. The portable information terminal device according to Claim 1, wherein
said display control means performs scroll display of said detailed information in the case where said detailed information taken can not be displayed at the same time at said partial area.

3. The portable information terminal device according to Claim 1, wherein
said display control means displays said partial area in a color different from that of the other area of said display means.

4. The portable information terminal device according to Claim 1, wherein
said display control means blinks and displays said detailed information.
